# EUROPEAN PATENT APPLICATION

(11) **EP 1 443 763 A2**
(43) Date of publication of application: **04.08.2004**
(21) Application number: 04002166.9
(22) Date of filing: 30.01.2004
(51) Int. Cl.: H04N 7/16, H04N 7/173

(54) **Display device and image magnifying method**

(30) Priority: 31.01.2003 JP 2003024855
(71) Applicant: Kabushiki Kaisha Toshiba, Tokyo (JP)
(72) Inventor: Fujihito, Numano c/o Toshiba Corporation, Tokyo 105-8001 (JP)
(74) Representative: Henkel, Feiler & Hänzel

(57) **Abstract**

A display device comprises a display unit (102) which displays an image and can be remotely controlled by a remote controller (10), and a control unit which magnifies a predetermined information included in the image displayed by the display unit (102), according to a distance between the remote controller (10) and the control unit (101).

## Description

The present invention relates to a display device which is preferably applied to an information processing unit and image displaying unit, which can remotely control image displaying, and an image magnifying method.

In a television receiver, there is a technique to control magnification and display of a part of an original image with being magnified by operating the button of a remote controller (e.g., Japanese Patent Application KOKAI Publication No. 10-149150).

This patent application proposes to install a personal computer in a living room of a home, and to display the image processed by a personal computer in a display that displays the image of a TV program. In this case, unlike an ordinary OA equipment, the user views the image from a relatively distant place just like when using an AV equipment. Thus, the user is difficult to recognize an icon consisting of character information and fine graphics. To solve this problem, a magnify button, a magnifying power change button and a magnifying area change button are provided in a remote controller in order to exactly recognize an image from a distant place. When the magnify button is pressed, a part of an original image is magnified and displayed. A magnifying area can be moved in the direction specified by a direction switch. When the magnifying power change button is pressed, the magnifying power is changed. When the magnifying area change button is pressed, the size of a magnifying area is changed.

However, the initial value of the magnifying power is set in this patent application, and when the user's desired magnification is different from the initial value, readjustment is necessary each time, and this is inconvenient.

The present invention is directed to method and apparatus that substantially obviates one or more of the problems due to limitations and disadvantages of the related art.

According to an embodiment of the present invention, a display device comprises:
a display unit which displays an image and can be remotely controlled by a remote controller; and
a control unit which magnifies a predetermined information included in the image displayed by the display unit, according to a distance between the remote controller and the control unit.

According to another embodiment of the present invention, a method of magnifying and displaying, comprising:
displaying an image on a display unit; and
magnifying a predetermined information included in a displayed image, according to a distance between the displaying unit and a person who watches the image.

According to still another embodiment of the present invention, a method of magnifying and displaying, comprising:
displaying an image on a display unit; and
reducing a display area in a virtual screen to magnify the displayed image, according to a distance between the displaying unit and a person who watches the image.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows the configuration of the whole home network system provided with a wireless AV station according to an embodiment of the present invention;
FIG. 2 is a block diagram showing the configuration of a server (a wireless AV station) provided in the home network system;
FIG. 3 is a block diagram showing the detailed configuration of the server (the wireless AV station) provided in the home network system;
FIG. 4 is a view showing a layout example of the buttons of a remote controller;
FIG. 5 is a view showing the configuration of a contents management table (TBL); and
FIG. 6 is a flowchart showing the procedure of magnifying and displaying.

An embodiment of a display device according to the present invention will now be described with reference to the accompanying drawings.

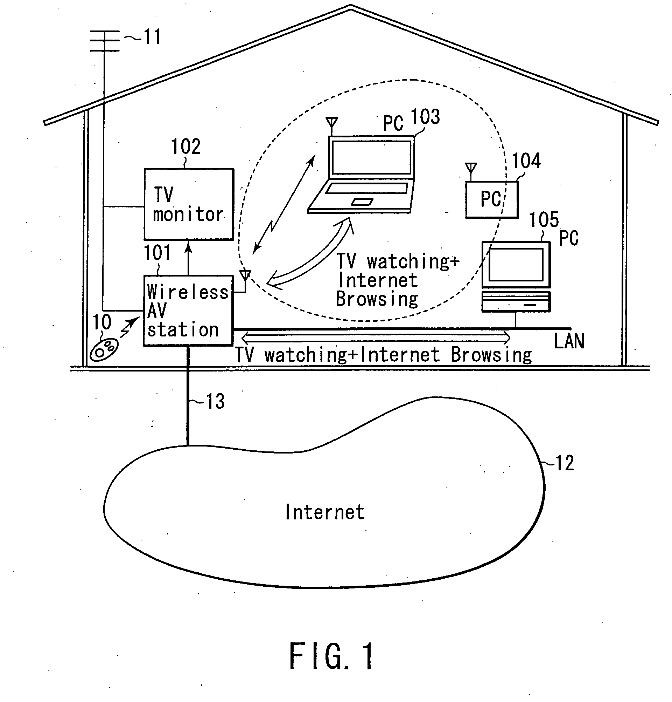

FIG. 1 shows the configuration of a home network system including a wireless AV (Audio Video) station as an embodiment of a display device according to the present invention.

The home network system comprises a wireless AV station 101, a TV (Television) monitor 102, and notebook type personal computers 103, 104, and a desktop type personal computer 105. The TV monitor 102 may be replaced with a monitor of a CRT display, a LCD panel and a plasma display without a receiving function (a TV tuner).

The wireless AV station 101 is a unit which functions as a home network server, and is specifiable and controllable by a remote controller 10 using an infrared communication function, for example. The wireless AV station 101 has the function of magnifying and displaying the whole image or the specific information (e.g., character information such as subtitles, and operation icons) displayed in the TV monitor 102. The wireless AV station 101 performs a resume playback by a hierarchical contents management, and a transmission (distribution) of the playback data to the playback data request source. In this embodiment, it is possible by operating the remote controller 10 to perform the resume playback by the hierarchical contents management, such as, owner (unit)-specified resume playback, contents-type specified resume playback and contents-specified resume playback.

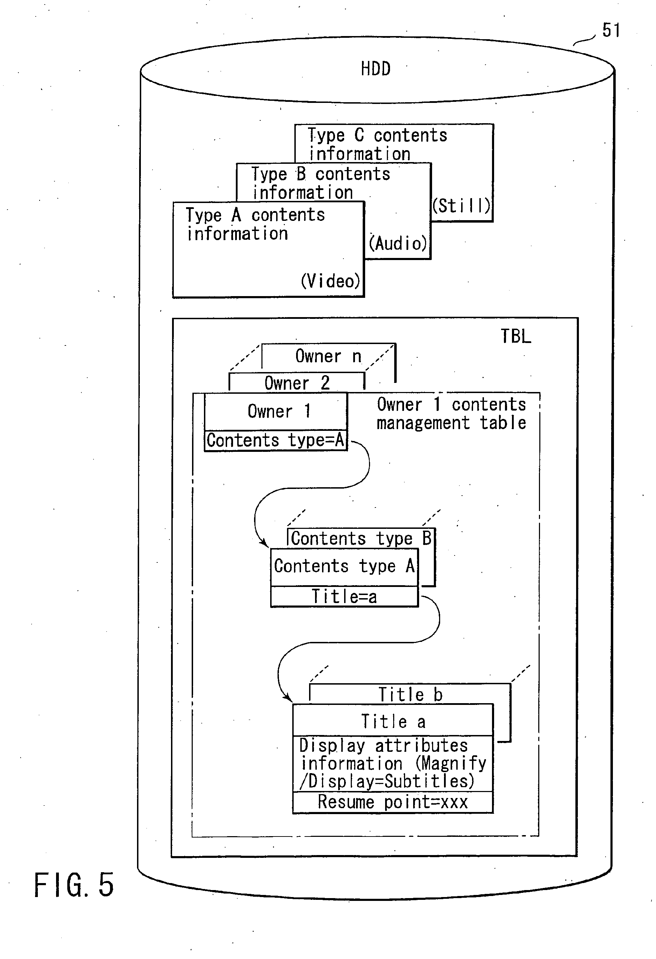

In the hierarchical contents management, the magnifying and displaying information according to the specification of the remote controller 10 is managed for each contents. In the movie program contents, for example, when the contents have the subtitles information managed separately from the main images, the subtitles information is managed as an object of magnifying and displaying. In the previously created presentation program contents, when the contents have the information to be selectively magnified and displayed, that information is managed as an object of magnifying and displaying (refer to FIG. 5). In this embodiment, for the contents whose magnifying and displaying information is not managed in the hierarchical contents management, the whole display screen is magnified and displayed. In this time, the magnifying and displaying are realized by reducing a display area in the desktop screen (virtual screen).

The wireless AV station 101 provides information processing units, such as the personal computers 103, 104 and 105, with services for watching TV or other broadcast program data and for browsing Internet in addition to a contents providing service by the resume playback by the above-mentioned hierarchical contents management, through a home wireless network or home wired network.

The wireless AV station 101 is connected to an external global network (external network) such as Internet 12 through a communication line 13, such as ISDN (Integrated Services Digital Network), ADSL (Asymmetric Digital Subscriber Line) and CATV (Cable TV). The wireless AV station 101 is connected to the information processing unit in a home through a wired or wireless network which is a part of the home network.

Each of the personal computers 103, 104 and 105 is an information processing unit functioning as a client of the wireless AV station 101. The notebook type personal computers 103 and 104 are provided with a wireless communication device, and each of the personal computers 103 and 104 can be connected to the wireless AV station 101 through a wireless communication network (a wireless LAN). The personal computers 103 and 104 can also be connected to the wireless AV station through a wired communication network (a wired LAN). The desktop type personal computer 105 is connected to the wireless AV station 101 through a wired communication network (a wired LAN).

The wireless AV station 101 connects the personal computers 103, 104 and 105 to the Internet 12, and performs data transfer between Web sites on the Internet 12 and the personal computers 103, 104 and 105.

An antenna cable connected to a TV broadcast receiving antenna 11 installed outside is led in a house. The antenna cable is connected to the TV monitor 102 and the wireless AV station 101. The broadcast program data sent from TV stations can be received and reproduced by the TV monitor 102, and they can also be received by the wireless AV station 101. The wireless AV station 101 sends (distributes) the received broadcast program data to the personal computers 103, 104 and 105 through a wireless or wired LAN.

The wireless AV station 101 provides the following functions.

### • Wireless router function:

The wireless router function wirelessly connects the wireless AV station 101 to each information processing unit communicable with the AV station 101, and performs data transfer between the Web sites on the Internet 12 and the information processing units. The user can browse Internet wirelessly from anywhere in a home by using the notebook type personal computer 103 or 104 connectable with the wireless AV station 101 through a wireless LAN.

### •TV function:

The TV function sends the broadcast program data received by the wireless AV station 101 to each information processing unit connected to the wireless AV station 101 through a wireless or wired LAN. The user can watch broadcasting program data (live images) from anywhere in a home by using the notebook type personal computer 103 or 104.

### •TV recording function:

The wireless AV station 101 contains a magnetic disk drive unit (a hard disk drive; HDD) as a large capacity storage device to record broadcast program data. The wireless AV station 101 can record live broadcasting program data, for example, as a file in the magnetic disk drive unit, while sending its data wirelessly to an information processing unit. The wireless AV station 101 can also receive and record live broadcasting program data in the magnetic disk drive unit, while sending broadcast program data (recorded images) already recorded in the magnetic disk drive unit wirelessly to an information processing unit. The AV station 101 can also output the broadcast program data recorded in the magnetic disk drive to the TV monitor 102. The AV station 101 can also record an image picked up from the broadcast program data in the magnetic disk drive unit as a still image together with a digital camera picture, and sends (distributes) the images to the personal computers 103, 104 and 105.

### • Contents server function:

The wireless AV station 101 can send (distribute) a requesting processing unit upon request the broadcast program data, video contents including DVD vide images (moving pictures), audio contents including the sound data of music programs, still images picked up from moving pictures, and still image contents such as digital camera pictures recorded as files in the magnetic disk drive unit. These contents data can be sent in various formats including MPEG-2, MP3, WMA, WAVE and JPEG.

### •Remote control function:

The TV function and TV recording function of the wireless AV station 101 can be controlled remotely from the personal computers 103, 104 and 105. It is also possible to control the TV function and TV recording function of the wireless AV station 101 by using the exclusive remote control unit 10 to operate the wireless AV station 101. It is further possible to control the contents server function for the video contents, audio contents and still image contents. The contents providing service given in this time by the resume playback by the hierarchical contents management will be explained later. In addition to the remote controller 10, the wireless AV station 101 can also be controlled remotely from a cellular phone or a personal computer through the Internet. In this embodiment, a remote control function is provided, which magnifies and displays the whole image displayed on the TV monitor 102 or specific information in the displayed image (e.g., character information such as subtitles, and operation icons), according to the distance between the remote controller 10 and the wireless AV station 101, by operating the buttons of the remote controller 10. In the hierarchical contents management, for the contents whose magnifying and displaying information is not managed, the whole display screen is magnified and displayed. In this case, magnifying and displaying are realized by reducing the display range (display area) in the desktop screen.

### • Contents management and distribution function:

The wireless AV station 101 can store a still image picked up from the broadcast program data, and a picture taken by a digital still camera in the magnetic disk drive unit, as still image contents, and can distribute the still images to the TV monitor 102 and the personal computers 103, 104 and 105. The AV station 101 can also store images in the magnetic disk drive unit, as video contents, and can distribute them to the TV monitor 102 and the personal computers 103, 104 and 105. The AV station 101 can also store the sound data such as musical program and recorded data in the magnetic disk drive unit, as audio contents, and can distribute them to the personal computers 103, 104 and 105.

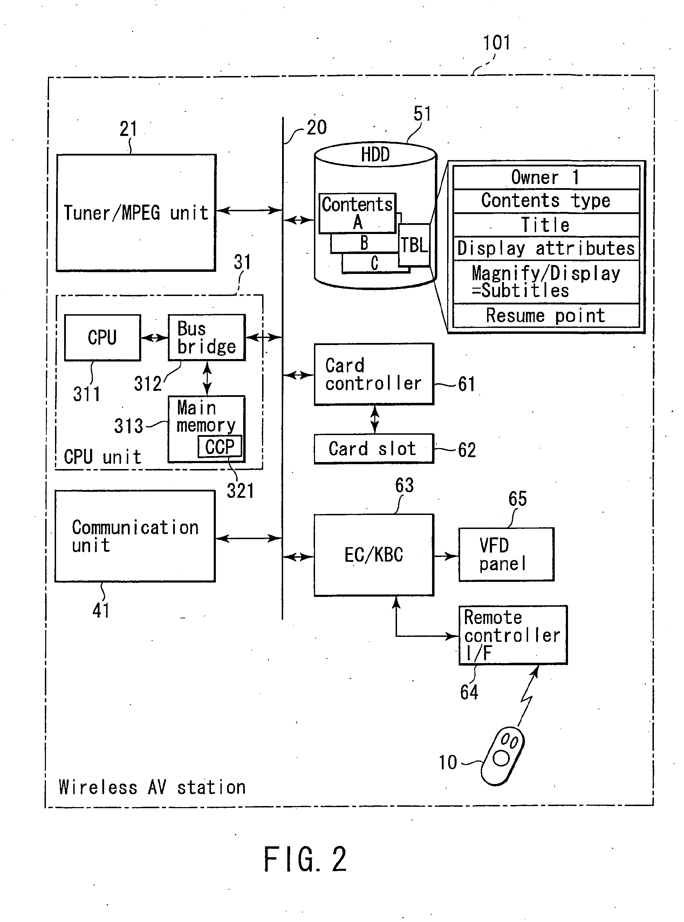

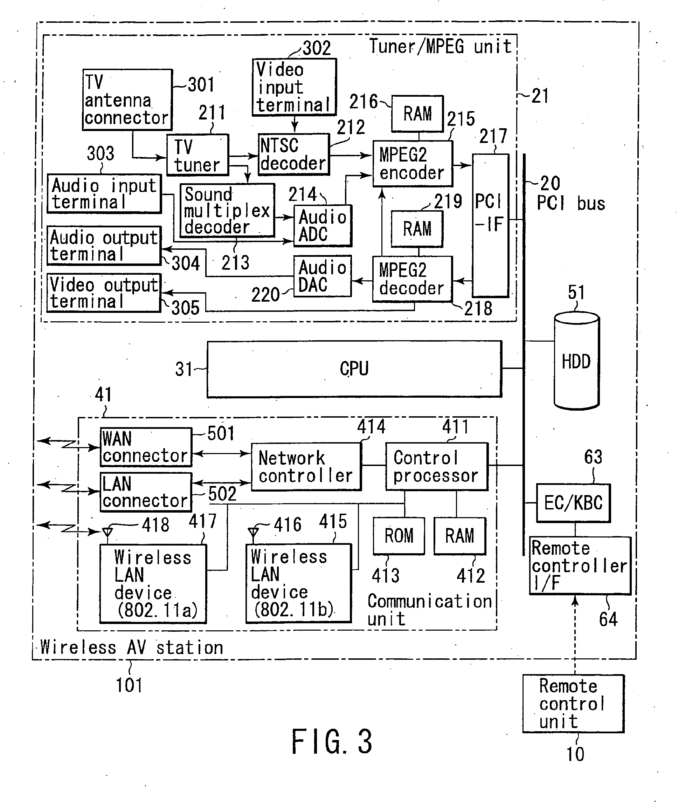

The wireless AV station 101 roughly includes three components as shown in FIGS. 2 and 3, that is, a tuner/MPEG unit 21, a CPU unit 31 and a communication unit 41.

These tuner/MPEG unit 21, CPU unit 31 and communication unit 41 are connected to a bus 20 such as a PCI bus. A magnetic disk drive unit (a hard disk drive; HDD) 51 is also connected to the bus 20.

The tuner/MPEG unit 21 receives broadcast program data, compresses and encodes the received broadcast program data, and decodes the compressed and encoded TV program data.

The tuner/MPEG unit 21 comprises a TV tuner 211, a NTSC (National TV Standards Committee) decoder 212, a sound multiplex decoder 213, an audio A/D converter (an audio ADC) 214, an MPEG-2 encoder 215, a RAM 216, a PCI bus interface (PCI-IF) 217, an MPEG-2 decoder 218, a RAM 219, and an audio D/A converter (an audio DAC) 220, as shown in FIG. 3.

The CPU unit 31 executes the resume playback by the hierarchical contents management with reference to the contents management table (TBL) stored in the HDD 51, according to the contents control program (CCP) 321 stored in a main memory 313. In the resume playback by the hierarchical contents management, in this embodiment, the whole image displayed on the TV monitor 102 or specific information in the displayed image (e.g., character information such as subtitles, and operation icons) is magnified and displayed according to the distance between the remote controller 10 and the wireless AV station 101, by operating the buttons of the remote controller 10. Further, for the contents whose magnifying and displaying information are not managed by the hierarchical contents management, the whole display screen is magnified (by reducing the display range in the desktop area).

The CPU unit 31 controls the TV tuner 211, MPEG-2 encoder 215 and MPEG-2 decoder 218 of the tuner/MPEG unit 21, and controls data writing and data reading in/from the HDD 51. The CPU unit 31 receives the commands concerning the TV audience sent from the personal computers 103, 104 and 105, by communicating with the communication unit 41, and sends the personal computers 103, 104 and 105 the MPEG-2 streams of broadcast programs, recorded programs and various program data to be sent.

The CPU unit 31 comprises a CPU 311, a bus bridge 312 which connects a CPU bus of the CPU 311 to the PCI bus 20, and a main memory 313, as shown in FIG. 2.

The main memory 313 stores various application programs which realize the functions of the operating system (OS) and wireless AV station. In this embodiment, the main memory 313 stores the contents control program (CCP) 321 which realizes the resume playback by the hierarchical contents management, and the contents management table (TBL). The contents control program (CCP) 321 is executed by the CPU 311 by receiving the resume playback instruction from the remote controller 10 or the personal computers 103, 104 and 105.

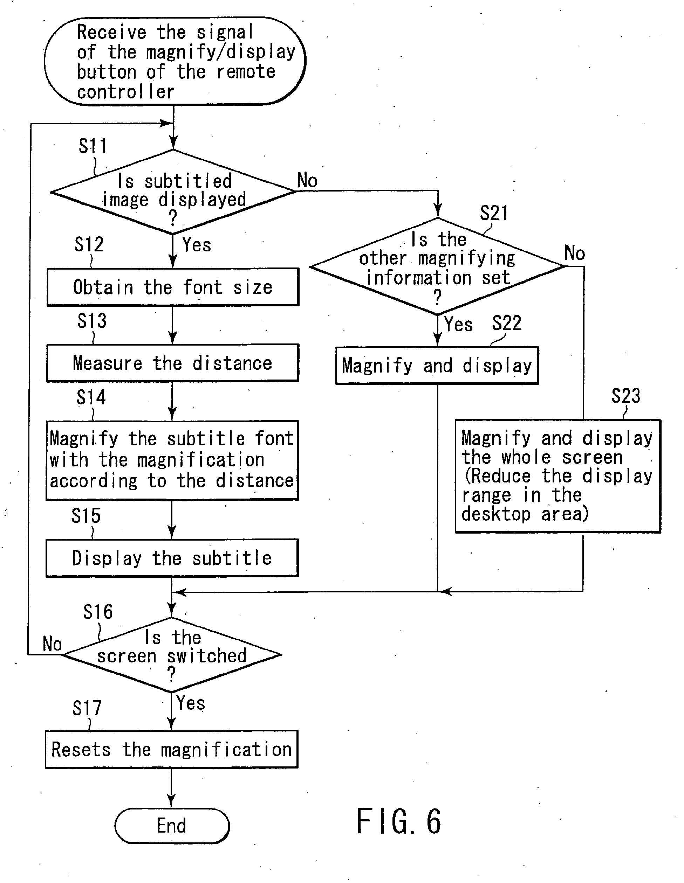

FIG. 5 shows an example of the configuration of the contents management table (TBL) used here. FIG. 6 shows the procedure, which is to be taken when the magnify/display button (74 shown in FIG. 5 in this embodiment) of the remote controller 10 is operated, among the operations according to the contents control program 321.

The communication unit 41 is a communication control unit operable alone as a wireless LAN router. The communication unit 41 is connectable wirelessly with the personal computers 103 and 104, and is also connected to the personal computer 105 through a wired LAN. The communication unit 41 connects the personal computers 103, 104 and 105 to the Internet 12 upon request from the personal computers, and performs data transfer between the Internet 12 and the personal computers 103, 104 and 105.

The communication unit 41 comprises a control processor 411, a RAM 412, a ROM 413, a network controller 414, two wireless LAN devices 415 and 417, a WAN connector 501, and a LAN connector 502, as shown in FIG. 3.

The WAN (Wide Area Network) connector 501 is a broadband terminal used for data transfer with the Internet 12, and is connected to the communication line 13 through a modem, for example. The LAN connector 502 is connected to a wired LAN in a home. The network controller 414 is a network control device, which controls data transfer with the Internet 12 through the WAN connector 501, and data transfer with the home wired LAN through the LAN connector 502. The wireless LAN devices 415 and 417 are wireless communication devices, which perform data transfer with the personal computers 103 and 104 through a wireless LAN, and communicates wirelessly with the personal computers 103 and 104 through corresponding antennas 416 and 418. The wireless LAN device 415 executes wireless communication conformable to the IEEE 802.11b standard. The wireless LAN device 417 executes wireless communication conformable to the IEEE 802.11a standard. The control processor 411 controls data transfer between the Internet 12 and the personal computers 103, 104 and 105, by controlling the network controller 414 and wireless LAN devices 415 and 417.

The wireless AV station 101 comprises a card controller 61, a card slot 62, an EC/KBC 63, a remote controller interface (remote controller I/F) 64, and an operation status display (VFD panel) 65. The card controller 61 controls the access to the memory card fit in the card slot 62 of the wireless AV station 101. The card controller 61 is used to read the sill image data and audio data stored in the memory card, and records them in the HDD 51.

The EC/KBC 63 and remote controller interface 64 are used to receive the remote control code sent as an infrared signal from the remote controller 10. The received remote control code is sent to the CPU unit 31 through the bus 20. In this embodiment, when an instruction signal is sent from the remote controller 10 by operating the magnify/display button, a magnify/display command is sent from the EC/KBC 63 to the CPU unit 31. The CPU unit 31 receives the magnify/display command, and executes magnifying and display, as shown in FIG. 6.

The HDD 51 is used to record broadcast program data, still image data, audio data and other various contents. In this embodiment, the HDD 51 stores video contents including DVD and other various images (moving pictures), audio contents including sound data of musical programs, still images picked up from moving pictures, and still image contents including digital camera pictures, and a contents management table (TBL) to enable the resume playback of these contents in each level of these contents. The contents management table (TBL) is referred to when the contents control program (CCP) 321 is executed. The contents management table (TBL) can be registered and rewritten (updated) in a desired level (owner/contents type/title) under the control of the CPU 311, according to the instruction from the user (the owner of the remote controller 10). The magnifying and displaying information can be defined for each contents on the contents management table (TBL). (Referring to FIG. 5.)

The CPU 311 manages the contents recorded in the HDD 51 as contents data base. In the contents data base, additional information, such as, a program title name, a channel number, a tune name, a genre and an artist name is stored for each contents data recorded in the HDD 51. The CPU 311 provides the contents of the contents database as a contents menu on the screen of the TV monitor 102 or the information processing unit, according to the command sent from the information processing unit or the remote controller 10. The user can select desired contents data by referring to the contents menu.

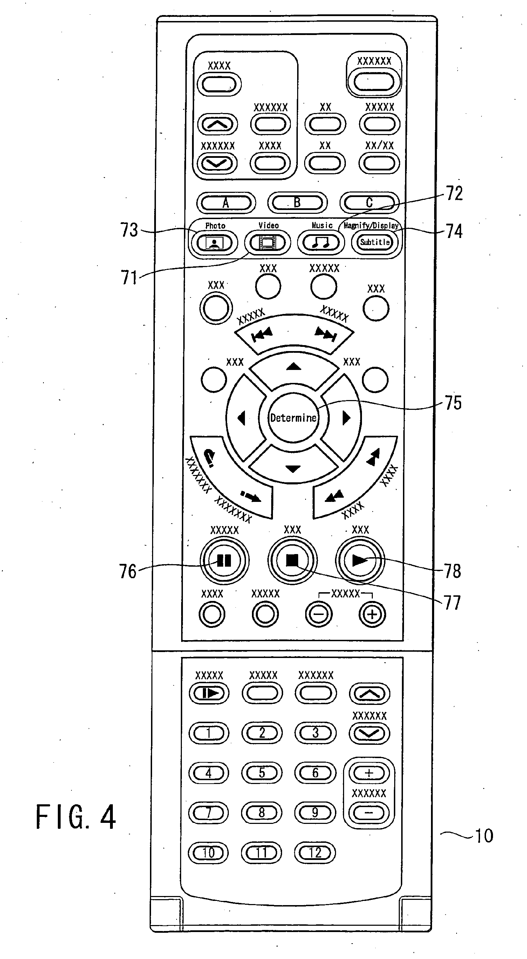

FIG. 4 shows a layout example of the buttons of the remote controller 10. By operating the magnify/display button 74 of the remote controller 10, the corresponding instruction command from the remote controller 10 is accepted by the remote control interface 64 and notified to the CPU 311 through the EC/KBC 63. The CPU unit 31 receives the magnify command, and executes magnifying and displaying, as shown in FIG. 6.

The remote controller 10 has a video button 71, a music button 72, a photo button 73, a set button 75, a pause button 76, a stop button 77, and numeric value input keys. When the video button 71, the music button 72 or the photo button 73 is pressed, the corresponding playback command from the remote controller 10 is accepted by the remote controller interface 64, and the contents according to the command can be played. When the magnify/display button 74 is pressed while the contents including the image of the photo button 73, for example, is being played back, the CPU unit 31 accepts the corresponding command and executes magnifying and displaying according to the contents defined in the contents management table (TBL), as shown in FIG. 6.

The remote controller 10 and the remote controller interface 64 are provided with a measuring means which measures the distance therebetween, that is, the distance between the wireless AV station 101 with the TV monitor 102 and the remote controller 10 to remote control the wireless AV station 101. An example of the measuring means is realized by providing a clock circuit using a high speed clock frequency for checking time between the remote controller 10 and the remote controller interface 64. In this case, when the magnify/display button 74 of the remote controller 10 is pressed, predicted time data indicating a predicted time is sent to the remote controller interface 64, and when the predicted time comes up, the time notice data is sent to the remote controller interface 64. The predicted time data and the time notice data received by the remote controller interface 64 are supplied to the CPU 311 of the CPU unit 31 through the EC/KBC 63. The CPU 311 compares the predicted time data with the time notice data, and recognizes from the time difference (pulse difference) the distance between the remote controller 10 and the wireless AV station 101, and executes magnifying and displaying according to the recognized distance, as shown in FIG. 6.

It is to be noted that the means for checking the distance between the remote controller 10 and the wireless AV station 101 is not limited to the above-mentioned example. For example, it is also possible to use an infrared sensor used to determine whether the operator of the remote controller 10 is operating at a certain distance further from the wireless AV station 101, and the CPU 311 determines based on an output from the infrared sensor whether to execute magnifying and displaying shown in FIG. 6 when the magnify/display button 74 of the remote controller 10 is pressed.

FIG. 5 shows an example of the configuration of the contents management table (TBL). The contents management structure shown here assumes audio, video and still contents types, for example, and three contents types A - C are layered and managed for a plurality of owners (1 - n).

The magnifying and displaying information are managed for each contents on the contents management table (TBL). In the movie program contents, for example, when the contents have the subtitles information managed separately from the main images, the subtitles information is managed as an object of magnifying and displaying. In the previously created presentation program contents, when the contents have the information to be selectively magnified and displayed, that information is managed as an object of magnifying and displaying. In this embodiment, for the contents whose magnifying and displaying information are not managed in the hierarchical contents management, the whole display screen is magnified and displayed. In this time, magnifying and displaying are realized by reducing a display area in the desktop screen (virtual screen).

Now, explanation will be given to the operations in the embodiment'of the present invention with reference to the attached drawings. The detailed operations of the resume playback and contents management will be omitted.

FIG. 6 shows the procedure of magnifying and displaying, out of the process according to the contents control program (CCP) 321, executed by the CPU 311 when the magnify/display button 74 of the remote controller 10 is pressed.

It is assumed that a subtitled movie program (moving picture contents) whose subtitles are defined as the magnifying and displaying information in the contents management table (TBL), is being played back on the TV monitor 102, for example, under the control of the wireless AV station 101. When the magnify/display button 74 of the remote controller 10 is pressed during playback of the program, the corresponding magnify command is notified to the CPU unit 31 through the EC/KBC 63.

The CPU unit 31 receives the magnify command, and executes magnifying and displaying, as shown in FIG. 6.

First, the CPU unit 31 refers to the contents management table (TBL) stored in the main memory 313, determines whether the magnifying and displaying information displayed now on the TV monitor 102 are defined, and when they are defined, magnifies these information. Here, for the subtitled movie program being displayed, the CPU unit 31 determines whether the magnification and display of the subtitles are defined, and when they are defined (step S11), the CPU unit 31 magnifies and displays the subtitles according to the distance between the remote controller 10 and the AV station 101 (steps S12 - S15). The measurement of the distance between the remote controller 10 and the AV station 101 (step S13) has been described, and the explanation is omitted here. As for the magnifying process (step S14), the font size of the subtitles is obtained (step S12), and the subtitles are magnified based on the font size according to the distance. But, the magnifying method is not to be limited to this. It is also possible to magnify the whole subtitles display area in the vertical direction, horizontal direction, or in both vertical and horizontal directions, on a bit map.

When the magnify/display button 74 of the remote controller 10 is pressed, and the operation icon or other information included in the contents being displayed on the TV monitor 102 are defined to be magnified, the corresponding information is magnified according to the distance between the remote controller 10 and the AV station 101 (step S22).

When the magnify/display button 74 of the remote controller 10 is pressed, and the contents being displayed on the TV monitor 102 does not include information to be defined to magnify in the contents management table (TBL), for example, the contents are a presentation program (step S21, No), the whole information of the presentation image is magnified in the desktop area including the presentation image displaying range, by reducing the display range (display area), according to the distance between the remote controller 10 and the AV station 101 (step S23).

As explained above, while contents playback image is being magnified and displayed responding to depression of the magnify/display button 74 of the remote controller 10 (step S16, Yes), if the contents playback is reset or ended, the magnifying and displaying process is terminated (step S17). In this time, it is also possible to reset the magnifying and displaying step by pressing the key or button of the TV monitor 102.

As explained above, the displaying information can be magnified according to the distance between the remote controller 10 operating position and the wireless AV station 101, by pressing the magnify/display button 74 of the remote controller 10, and the visibility of the displayed information from the remote control position can be improved by a simple operation without complicating the remote controller operation.

According to the embodiment, there are provided a display device and display magnifying method which are improved in the visibility and operability without the necessity of user's particular operation.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

## Claims

1. A display device comprising:
a display unit (102) which displays an image and can be remotely controlled by a remote controller (10); and
a control unit (101) which magnifies a predetermined information included in the image displayed by the display unit (102), **characterized in that** the control unit (101) magnifies the predetermined information according to a distance between the remote controller (10) and the control unit.

2. The display device according to claim 1, **characterized in that** the control unit (101) comprises a distance measuring unit (31) which measures the distance, when receiving a predetermined signal from the remote controller (10).

3. The display device according to claim 1, **characterized in that** the control unit (101) comprises a distance deciding unit (31) which decides whether the distance exceeds a specified value, when receiving a predetermined signal from the remote controller (10).

4. The display device according to claim 1, **characterized in that** the control unit (101) magnifies the predetermined information according to control information attached to the image displayed by the display unit (102).

5. The display device according to claim 1, **characterized in that** the control unit (101) magnifies a whole image displayed by the display unit (102).

6. The display device according to claim 1, **characterized in that** the control unit (101) magnifies character information included in the image displayed by the display unit (102).

7. The display device according to claim 1, **characterized in that** the control unit (101) magnifies subtitle information included in the image displayed by the display unit (102).

8. The display device according to claim 1, **characterized in that** the control unit (101) magnifies an operation icon included in the image displayed by the display unit (102).

9. The display device according to claim 1, **characterized in that** the control unit (101) manages video contents together with display attribute information, and magnifies the predetermined information included in the video contents according to the display attribute information.

10. The display device according to claim 1, **characterized in that** the control unit (101) resets a magnifying process according to an external instruction.

11. The display device according to claim 1, **characterized in that** the control unit (101) resets a magnifying process, when the display unit (102) is operated by an operating means other than the remote controller (10).

12. A method of magnifying and displaying, **characterized by** comprising:
displaying an image on a display unit (102); and
magnifying a predetermined information included in a displayed image, according to a distance between the displaying unit and a person who watches the image.

13. The method according to claim 12, **characterized in that** the magnifying magnifies the predetermined information according to control information attached to the image displayed by the display unit (102).

14. A method of magnifying and displaying, **characterized by** comprising:
displaying an image within a certain display area on a display screen of a display unit (102); and
reducing the certain display area to magnify the displayed image, according to a distance between the displaying unit and a person who watches the image.

15. The method according to claim 14, **characterized by** further comprising:
magnifying subtitle information included in the displayed image according to the distance.

16. The method according to claim 14, **characterized by** further comprising:
magnifying an operation icon included in the displayed image according to the distance.
